(19) Europäisches Patentamt

European Patent Office

Office européen des brevets

(11) **EP 1 065 903 A2**

(12) **EUROPÄISCHE PATENTANMELDUNG**

(43) Veröffentlichungstag:
**03.01.2001 Patentblatt 2001/01**

(51) Int. Cl.⁷: **H04Q 7/38**

(21) Anmeldenummer: **00113521.9**

(22) Anmeldetag: **26.06.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.06.1999 DE 19929385**

(71) Anmelder: **ROBERT BOSCH GMBH**
**70442 Stuttgart (DE)**

(72) Erfinder:
- **Vollmer, Vasco**
  **29471 Gartow (DE)**
- **Radimirsch, Markus**
  **30880 Laatzen (DE)**

(54) **Verfahren zur Vergabe von Übertragungsressourcen in einem zentralgesteuerten Kommunikationssystem**

(57) Die Vergabe von Übertraungsressourcen in zentralgesteuerten Kommunikationsnetzen wird für rahmenorientierte Verbindungen mit weitgehend konstanter Datenrate unabhängig von vorhergehenden Ressourcenanforderungen durch ein Terminal (T1, T2 ...) durchgeführt. Solche Verbindungen werden besonders gekennzeichnet.

Es kann auf eine Ressourcenanforderung durch Terminals (T1, T2 ...) für solche Verbindungen verzichtet werden, wodurch sich die Verarbeitung in einem Terminal vereinfacht und Übertragungsressourcenkapazität eingespart wird.

| Rahmen 1: | BC-P | T1 | T1 | T2 | | T3 | | RA-P |
|---|---|---|---|---|---|---|---|---|
| Rahmen 2: | BC-P | Leer | T2 | | T3 | | | RA-P |
| Rahmen 3: | BC-P | Leer | | T2 | T3 | | | RA-P |
| Rahmen 4: | BC-P | T1 | T1 | T2 | T3 | | | RA-P |
| Rahmen 5: | BC-P | T3 | | | T2 | Leer | | RA-P |
| Rahmen 6: | BC-P | T3 | | T2 | Leer | | | RA-P |
| Rahmen 7: | BC-P | T1 | T1 | T2 | Leer | | | RA-P |

*Fig. 7*

EP 1 065 903 A2

**Beschreibung**

Stand der Technik

Die Erfindung geht aus von einem Verfahren zur Vergabe von Übertragungsressourcen in einem zentralgesteuerten Kommumikationssystem an Terminals, wobei die Übertragungsressourcenvergabe durch eine Zentrale an die Terminals des Kommunikationssystems erfolgt.

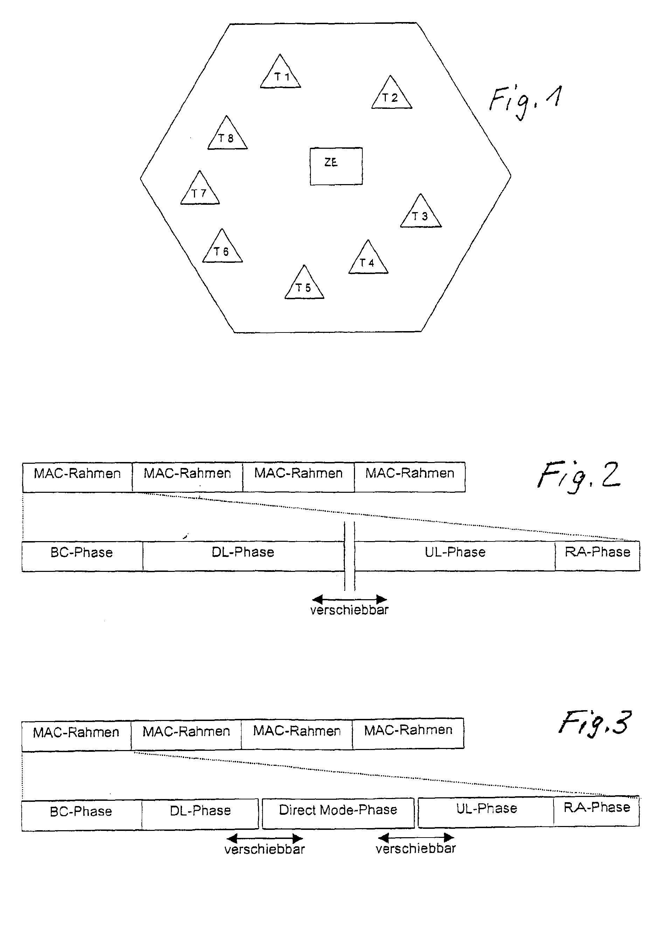

In einem Kommunikationssystem gemäß Figur 1 werden mehrere Terminals T1 ... T8, beispielsweise Funktelefone, PCs oder andere funk- oder leitungsgebundene Endgeräte, von einer Zentrale ZE koordiniert. Die Kommunikation erfolgt beispielsweise per Funk. Es ist auch möglich, daß die Terminals direkt miteinander kommunizieren, wobei sie von der Zentrale ZE koordiniert werden. Dabei teilen die Terminals der Zentrale ZE den Zustand ihrer Puffer, insbesondere den Füllstand von Sende- und Empfangspuffer, mit, und die Zentrale teilt den Terminals die Ressourcen zu. Die Zuteilung von Übertragungskapazität in einem solchen Kommunikationssystem geht beispielsweise aus [1] bis [3] hervor. Dazu wird üblicherweise ein MAC-Kanalzugriffsprotokoll (Medium Access Control) verwendet.

Zur Anforderung von Ressourcen durch ein Terminal versendet dieses eine sogenannte Ressource Request (RR)- Nachricht, in der sie ihre Bedürfnisse der Zentrale ZE mitteilt. RR-Nachrichten gelten für eine einzelne DLC (Data link Control)-Verbindung und enthalten die Anzahl der Nachrichten, die in den Puffern des Terminals auf Übertragung warten. Dabei ist wichtig, daß die Anzahl der wartenden Nachrichten im Puffer die Kapazität eines einzelnen MAC-Übertragungsrahmens weit übersteigen kann. Die Zentrale ZE vergibt die Kapazitäten der einzelnen Phasen eines MAC-Übertragungsrahmens wiederum auf der Basis einzelner DLC-Verbindungen. Für die Downlink-Phase (Zentrale in Richtung Terminal) kündigt sie an, welches Terminal welche Nachricht empfangen soll, für die Uplink-Phase (Terminal in Richtung Zentrale) wird angekündigt, welches Terminal zu einem bestimmten Zeitpunkt für eine DLC-Verbindung senden darf. Für den Direct Mode Kanal (direkte Kommunikation der Terminals untereinander) werden Sender und Empfänger und die DLC-Verbindung angekündigt.

Hierbei ist zu beachten, daß die RR-Nachrichten immer den aktuellen Füllstand des Puffers angeben sollen. Um Kapazität entsprechend des Füllstandes von der Zentrale ZE zugewiesen zu bekommen, ist es nicht ratsam, daß ein Terminal etwas Anderes als den aktuellen Füllstand an die Zentrale ZE weitergibt, da die Dringlichkeit der Übertragung von der Zentrale ZE sonst unter Umständen falsch eingeschätzt wird.

Die zuvor beschriebenen Mechanismen zur Anforderung und Zuweisung von Übertragungsressourcen sind geeignet für burstartigen, d.h. statistischen Datenverkehr.

Bei der ATM-Signalisierung werden die Parameter Datenrate, Zwischenankuftszeit und die maximale Schwankung der Zwischenankunftszeit (Jitter) beim Verbindungsaufbau übermittelt. Das verbreitetste Beispiel für CBR (Constant Bit Rate)-Verkehr ist sicherlich der Sprachverkehr ohne Komprimierung, bei dem im allgemeinen 64 kbit/s mit hoher Gleichmäßigkeit erzeugt werden. Diese werden dann im Sender gepuffert, bis z.B. eine ATM-Zelle gefüllt ist. Diese ATM-Zellen werden dann periodisch im Kommunikationssystem übertragen.

Vorteile der Erfindung

Mit den Maßnahmen des Anspruchs 1 ist es möglich die Vergabe von Übertragungsressourcen zu optimieren, insbesondere wenn Verbindungen konstanter Datenrate vorgesehen sind. Für Verbindungen mit konstanter Datenrate kann auf eine explizite Ressourcenanforderung durch Terminals verzichtet werden. Dadurch wird die Prozessierung in einem Terminal vereinfacht und Ressourcenkapazität eingespart.

Die Erfindung eignet sich vorteilhaft in solchen Kommunikationssystemen, wo außer dem Burstverkehr deterministischer Verkehr vorgesehen ist, d.h. wo insbesondere die Datenmenge pro Zeit (Datenrate) weitgehend konstant ist bzw. die Zwischenankunftszeit zwischen einzelnen Datenpaketen konstant ist. Bei ATM wird dieser Verkehrstyp als Constant Bit Rate (CBR)-Verkehr bezeichnet. Die Erfindung läßt sich jedoch unabhängig von ATM für alle deterministischen Verkehrsarten verwenden.

Bei bisherigen Ausgestaltungen, z.B. dem aktuellen Konzept des Hiperlan Typ 2 Kommunikationssystems, werden Übertragungsressourcen durch die Zentrale nur dann vergeben, wenn diese zuvor von einem Terminal angefordert wurden.

Dabei wird die zusätzliche Information, die über CBR-Verbindungen in der Zentrale vorhanden ist nicht genutzt. Die Erfindung dagegen nutzt diese zusätzlichen Informationen, um den Vorgang der Ressourcenanforderung zu optimieren. Obwohl die Ressourcenvergabe für Verbindungen mit weitgehend konstanter Datenrate bei der Erfindung ohne vorherige Ressourcenanforderung durch ein Terminal durchgeführt wird, vergibt die Zentrale dennoch Übertragungsressourcen, die sich an der durch die bei einem Verbindungsaufbau mit einem Terminal bekanntwerdende Datenrate, bzw. Zwischenankunftszeit von Datenpaketen (-Zellen) ergibt. Zusätzlich werden Nichtsynchronitäten zwischen Zentrale und Terminal korrigiert.

In den Unteransprüchen sind vorteilhafte Ausgestaltungen des Verfahrens nach der Erfindung aufgezeigt.

Zeichnungen

Anhand der weiteren Zeichnungen werden Ausführungsbeispiele der Erfindung erläutert. Es zeigen

Figur 2 einen MAC-Rahmen und dessen Inhalt,

Figur 3 einen MAC-Rahmen mit Direct-Mode-Phase,

Figur 4 einen MAC-Rahmen mit sektorisierten Antennen,

Figur 5 eine Funkzelle mit einer Zentrale und drei Terminals,

Figur 6 Übertragungsrahmen mit zu langsam ankommenden Datenpaketen in einem Terminal,

Figur 7 die Paketzuweisung an Terminals innerhalb mehrerer Rahmen,

Figur 8 den Zeittakt der Ankunftszeiten von Datenpaketen in einem Terminal,

Figur 9 Übertragungsrahmen mit zu schnell ankommenden Datenpaketen in einem Terminal,

Figur 10 eine Paketzuweisung an Terminals innerhalb mehrerer Rahmen in modifizierter Form.

Beschreibung von Ausführungsbeispielen

Vor der eigentlichen Beschreibung der Erfindung wird zum besseren Verständnis der Aufbau der Übertragungsrahmen, insbesondere nach dem MAC-Kanalzugriffsprotokoll näher erläutert.

Die Kommunikation erfolgt in einzelnen MAC-Rahmen (Frames) fester Dauer gemäß Figur 2. Jeder MAC-Rahmen ist wiederum eingeteilt in eine Broadcast-Phase BC, eine Downlink-Phase DL, eine Uplink-Phase UL und eine Random Access Phase RA. Während der Broadcast-Phase BC sendet die Zentrale ZE Informationen, die relevant für alle Terminals T1, T2 ... sind, z.B. Name und Adresse der Zentrale ZE, Ankündigung von Aussendungen in Down- und Uplink, Position der Random Access Phase. In der Downlink-Phase sendet die Zentrale ZE Daten an einzelne Terminals, in der Uplink-Phase senden einzelne Terminals Daten an die Zentrale ZE. In der Random Access Phase RA können Terminals, die keine Übertragungskapazität im Uplink zugewiesen haben, Nachrichten an die Zentrale ZE senden. Dabei greifen sie wahlfrei zu, so daß es zu Kollisionen kommen kann.

Figur 3 zeigt die Einbindung einer weiteren Phase in die MAC-Rahmen, die die direkte Kommunikation der Terminals untereinander erlaubt. Diese Phase heißt Direct Mode-Phase. Das sich hier ergebende Format des MAC-Rahmens zeigt Figur 3. Hierbei ist die genaue Reihenfolge der Phasen nicht relevant.

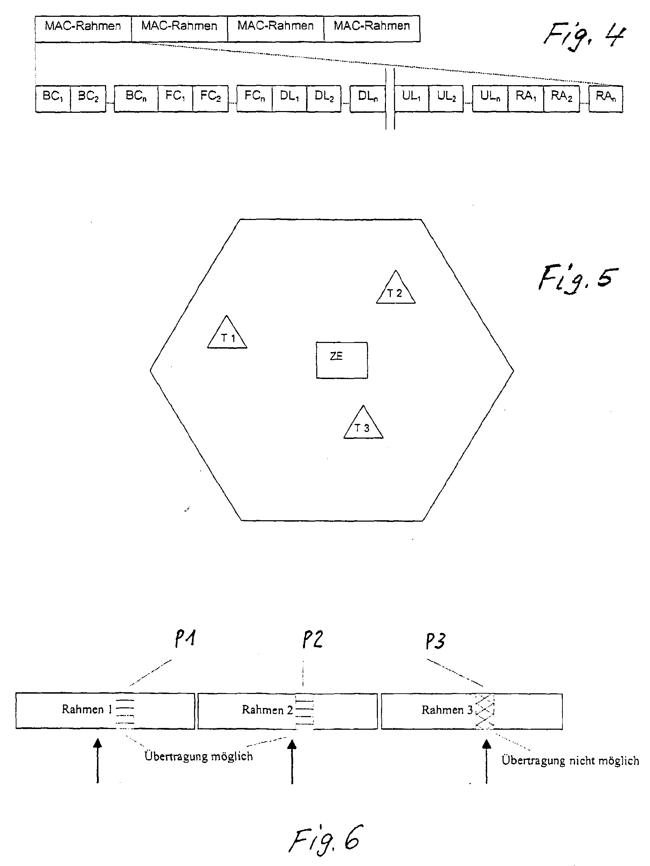

Bei der Einbeziehung sektorisierter Antennen in die Funkübertragung wird pro MAC-Rahmen genau eine Broadcast Phase und je keine oder eine weitere Phase pro Sektor bereitgestellt. Dies ist in Figur 4 dargestellt. Die Indizes beziehen sich hierbei auf die Sektoren FC, d.h. $FC_1$ bezieht sich auf Sektor 1, $FC_2$ auf Sektor 2. Die Broadcast-Phase BC aus Figur 2 wird hierbei in die zwei Phasen BC-Phase und FC-Phase aufgeteilt, die im MAC-Rahmen zeitlich getrennt auftreten.

Das Verfahren nach der Erfindung beruht im wesentlichen darauf, konstantratigen Verkehr CBR, d.h. Verkehr, der in regelmäßigen zeitlichen Abständen ein Datenpaket erzeugt, ohne vorhergehende Ressourcenanforderung zu bedienen. Dazu wird beim Verbindungsaufbau die spezielle Charakteristik dieser Verbindung übertragen. In der Verbindungsaufbauphase kennzeichnet die verbindungsinitiierte Seite (Terminal T1, T2 ... oder Zentrale ZE) die auf zubauende Verbindung als CBR Verkehr. Außerdem wird übertragen mit welcher Datenrate für diese Verbindung gesendet wird. Die Datenrate wird vorteilhaft als die Anzahl der Pakete (feste Länge), die in einer bestimmten Anzahl Rahmen gesendet werden, angegeben:

$$\text{Datenrate} = x \text{ Pakete} / n \text{ Rahmen.}$$

Diese Datenrate wird darm von der Zentrale ZE bei der Vergabe bei der Übertragungsressourcen berücksichtigt und jeweils im richtigen Rahmen die entsprechende Menge an Übertragungskapazität zugewiesen. Im Uplink wird diese dann vom Terminal entsprechend genutzt, um die aufgelaufenen Pakete dieser Verbindung zu senden. Im Downlink sendet die Zentrale ZE je nach Füllstand des Sendespeichers (Pufferzustand) entsprechend nach vorheriger Ankündigung in der Broadcast-Phase.

Aufgrund von Schwankungen innerhalb des Signalweges, z.B. wegen nichtsynchron laufender Taktgeneratoren in Zentrale ZE und Terminal, kann es passieren, daß ein Datenpaket nicht rechtzeitig zur Verfügung steht, bzw. daß die Ressourcenzuweisungen zu langsam erfolgen. Im Downlink kündigt die Zentrale ZE einfach entsprechend weniger Datenpakete an. Hier unterscheidet sich das Verhalten nicht von anderem Verkehr.

Im Uplink können zwei Fälle auftreten:

- ein, mehrere oder alle Pakete kommen langsamer an als beim Verbindungsaufbau verhandelt. In diesem Falle sendet das Terminal anstelle des geplanten Datenpaketes ein Füllpaket (Dummy-Paket), das keine Nutzdaten enthält. Dieses Füllpaket wird speziell gekennzeichnet und im Empfänger sofort verworfen. Die Zuständigkeit für das Erzeugen und Verwerfen der Pakete findet dabei vorzugsweise in der Sicherungsschicht (Schicht 2 des OSI Referenzmodells) statt, kann aber auch in einer darüberliegenden Schicht stattfinden,

- ein, mehrere oder alle Pakete kommen schneller an als beim Verbindungsaufbau verhandelt. In diesem Fall steht nicht genügend Kapazität zur Übertragung der Pakete zur Verfügung. Daher fordert das Terminal durch Versenden einer Ressourcenanforderung beispielsweise ein zusätzliches Paket zur Übertragung der zu schnell ankommenden Daten an. Wesentlich dabei ist, daß sowohl Terminal als auch die Zentrale ZE durch die Verbindungsaufbauphase wissen, daß es sich um eine CBR-Verbindung handelt. Dies führt dazu, daß Ressourcenanforderungen anders behandelt werden als bei anderen Verbindungen und dies sowohl der Zentrale ZE als auch dem Terminal bekannt ist. Das bedeutet, daß eine Ressourcenanforderung für eine CBR-Verbindung zu Ressourcenvergaben führt, die von der Zentrale ZE zusätzlich zu den bereits regelmäßig bereitgestellten Ressourcenvergaben gewährt werden. D.h., daß die Ressourcenanforderung auch nicht den Pufferzustand des Terminals für diese Verbindung angibt, sondern den Zusatzbedarf für eine CBR-Verbindung beschreibt.

In einem ersten Ausführungsbeispiel gemäß Figur 5 befinden sich in einer Funkzelle neben der Zentrale ZE drei Terminals T1, T2, T3. Terminal T1 öffnet jetzt eine CBR-Verbindung mit dem Parameter zwei Datenpakete pro drei Rahmen, d.h. in jedem dritten Rahmen erwartet das Terminal eine Ressourcenzuweisung für zwei Pakete. Terminal T2 dementsprechend eine CBR-Verbindung mit ca. einem Paket pro Rahmen. Terminal T3 hat eine Verbindung, die nicht konstantratig ist und fordert die gesamten Ressourcen an, die nicht anderweitig belegt sind. Terminal T3 fordert dabei für jeden Rahmen erneut die benötigte Menge an Ressourcen an. Den Verbindungen von Terminal T1 und T2 werden die Ressourcen automatisch zugewiesen.

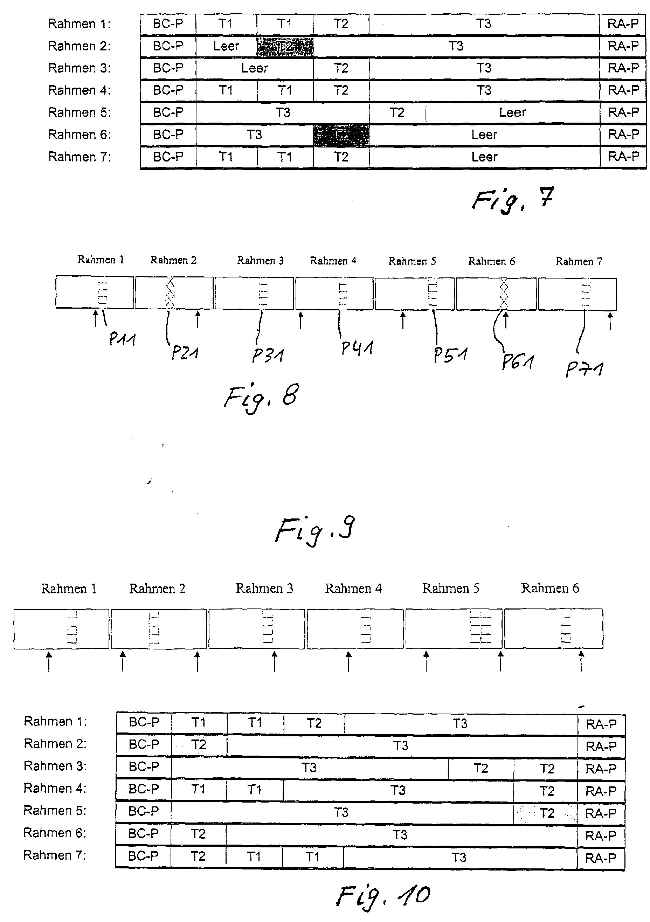

Nun laufen die Takte in Terminal T2 und Zentrale ZE nicht ganz synchron, was dazu führt, daß die Pakete in Terminal T2 etwas langsamer ankommen als Übertragungsressourcen von der Zentrale bereitgestellt werden. Dieser Vorgang ist in Figur 6 dargestellt. Die Positionen P1, P2 und P3 sind die von der Zentrale ZE zugewiesenen Positionen zur Datenübertragung. Die senkrechten Pfeile bezeichnen die Ankunftszeitpunkte der Datenpakete in Terminal T2. Wie aus Figur 6 hervorgeht, ist in den Positionen P1 und P2 Datenübertragung möglich nicht jedoch in Position P3. Nun ist zu bedenken, daß die Vereinbarung über die Datenrate beim Verbindungsaufbau nichts über die genaue Position der Ressourcenzuweisung aussagt, so daß diese von der Zentrale ZE im Prinzip beliebig in den Rahmen plaziert werden kann. Dabei ergibt sich während des Betriebs folgende in Figur 7 beispielhafte Rahmenstruktur (Downlink- und Direct Mode-Phase sind nicht berücksichtigt, da sie hier nicht relevant sind) :

In Rahmen 1 werden nach der Broadcast-Phase (BC-P) dem Terminal T1 zwei Pakete zugewiesen, dem Terminal T2 ein Paket, und den verbleibenden Rest bis zur Random-Access-Phase (RA-P) erhält Terminal T3.

In Rahmen 2 bleibt der Beginn frei, Terminal T2 bekommt ein Paket zugewiesen und Terminal T3 wiederum den Rest. Terminal T2 hat jedoch noch keine Daten zur Übertragung fertig (Feld ist grau schattiert) und verschickt daher ein Füllpaket. Dies kann aufgrund von Schwankungen bei der Generierung der Daten oder, wie hier gezeigt, durch eine andere zeitliche Position der Zuweisung innerhalb des Rahmens passieren. Wenn dies auftritt und die Schwankung regelmäßig ist, ist zu erwarten, daß der Versatz der Ankunftszeit nach einer Zeit wieder in die Nähe der Ressourcenzuweisung rückt. Dies ist in Figur 9 beispielhaft gezeigt, wobei der Taktversatz zwischen Terminal und Zentrale ZE bewußt als groß angenommen wurde.

In Rahmen 3 bleibt wiederum der Beginn frei, darin folgt die Zuweisung für Terminal T2. Da das Paket in Rahmen 2 nicht abgeliefert werden konnte, sendet Terminal T2 nun das Paket, das während Rahmen 2 angekommen war.

In Rahmen 4 erhält wiederum Terminal T1 seine zwei Pakete und Terminal T2 bekommt ein Paket zugewiesen.

In Rahmen 5 bekommt erst Terminal T3 eine Zuweisung, dann Terminal T2. Durch den Zeitversatz ist wiederum ein Paket zu spät angekommen, so daß Terminal T2 ein Füllpaket versendet.

In Rahmen 6 ist durch den Zeitversatz wieder ein Paket zu spät angekommen, so daß Terminal T2 ein Füllpaket sendet. Das in diesem Rahmen angekommene Paket wird dann in Rahmen 7 versendet.

Exemplarische Ankunftszeiten der Datenpakete und bereitgestellte Sendegelegenheiten (Vergabe von Übertragungsressourcen) für Terminal T2 sind für dieses erste Ausführungsbeispiel in Figur 8 dargestellt. Die Positionen P11 bis P71 bezeichnen die von der Zentrale ZE zugewiesene Position zur Datenübertragung. Die senkrechten Pfeile stellen die Ankunftszeitpunkte der Datenpakete in Terminal T2 dar. Während in den Positionen P11, P31, P41, P51 und P71 eine Übertragung möglich ist, ist dies in den Positionen P21 und P61 nicht möglich.
In einem zweiten Ausführungsbeispiel ist die Situation ähnlich wie im ersten Ausführungsbeispiel bezüglich Terminals, Zentrale ZE und aufgebauter Verbindungen. Der Unterschied besteht lediglich darin, daß die Daten in Terminal T2 zu schnell, aber regelmäßig ankommen. Daher muß das Terminal keine Füllpakete einfügen, sondern lediglich zusätzliche Übertragungsressourcen anfordern. Dies ist in Figur 9 dargestellt. Durch die zu schnell ankommenden Pakete in Terminal T2 kommt es in Rahmen 4 dazu, daß statt einem nun zwei Pakete im Puffer sind. Daher schickt Terminal T2 zusammen mit dem Paket in Rahmen 4 eine Ressourcenanforderung an die Zentrale ZE, in der sie die benötigte Übertragungsressourcen (Übertragungskapazität) angibt. Die Zentrale ZE vergibt weiterhin die Ressourcen, die beim Verbindungsaufbau vereinbart worden waren, und zusätzlich in Rahmen 5 eine weitere Sendegelegenheit aufgrund der Ressourcenanforderung in Rahmen 4.

In einem dritten Ausführungsbeispiel ist die Situation ähnlich wie in den vorigen Ausführungsbeispielen mit dem Unterschied, daß

- Terminal T2 nur einen leichten Taktversatz hat und zusätzlich die Pakete mit leichter Unregelmäßigkeit eintreffen,

- die Zentrale ZE nun die Position der Ressourcenzuweisung nicht mehr beliebig macht, sondern die Situation im Terminal mit in Betracht zieht.

Es ergibt sich die in Figur 10 gezeigte Paketzuweisung:

In Rahmen 1 werden nach der Broadcast-Phase (BC-P) dem Terminal T1 zwei Pakete zugewiesen, dem Terminal T2 ein Paket und den verbleibenden Rest bis zur Random-Access-Phase (RA-P) erhält Terminal T3.

In Rahmen 2 erhält Terminal T2 ein Paket zugewiesen und Terminal T3 wiederum den Rest. Terminal T2 hat jedoch noch keine Daten zur Übertragung fertig (Feld ist grau schattiert). Dies kann aufgrund von Schwankungen bei der Generierung der Daten, oder wie hier gezeigt durch eine andere zeitliche Position der Zuweisung innerhalb des Rahmens passieren. Wenn dies auftritt, fordert Terminal T2 über den normalen Ressource-Request RR, den sie zusammen mit dem Füllpaket verschickt, eine zusätzliche Sendegelegenheit an (hier ein Paket). Dieses Paket wird zusätzlich zu dem normalen CPR-Paket in Rahmen 3 zugewiesen. Zusätzlich erkennt die Zentrale, daß das Terminal T2 im vorhergehenden Rahmen die Daten nicht rechtzeitig fertig hatte, und verschiebt die zeitliche Lage der Übertragung für dieses Terminal im Rahmen nach hinten.

In Rahmen 4 erhält wiederum Terminal T1 seine zwei Pakete. Terminal T2 findet die Zuweisung für sein Paket wieder am Ende des Rahmens.

In Rahmen 5 stehen die Daten in Terminal T2 erneut nicht rechtzeitig zur Verfügung (Feld grau schattiert) und fordert deshalb Übertragungaressourcen für ein zusätzliches Paket an.

In Rahmen 6 wird Terminal T2 ein Paket für diese Daten zugewiesen und die automatische Zuweisung erneut an den Anfang von Rahmen 7 verschoben.

Für die vorgestellten Ausführungsbeispiele kann das Übertragungsmedium eine Funkübertragungsstrecke sein, oder eine Strecke in einem passiven optischen Netz oder eine Strecke in einem hybriden Glasfaser-Koax-Netz.

Die Festlegung der CBR-Rate beim Aufbau der Verbindung muß nicht zwangsläufig in Anzahl der Pakete bezogen auf eine bestimmte Anzahl Rahmen erfolgen. Möglich ist auch eine Anforderung in Bit pro Sekunde, oder eine andere Anforderung, die eine Festlegung auf eine bestimmte Datenkapazität (Datenrate innerhalb einer definierten Zeitspanne) ermöglicht. In diesem Fall rechnet die Zentrale ZE die Datenrate sinnvollerweise in einem Wert, der sich n Paketen pro m Rahmen ausdrücken läßt.

Literatur:

[1] Deutsche Patentanmeldung 197 26 120.5

[2] D. Petras, A. Krämling, "MAC protocol with polling and fast collision resolution for an ATM air interface", IEEE ATM Workshop, San Francisco, CA. August 1996

[3] D. Petras, A. Krämling, A. Hettich, "MAC protocol for Wireless ATM: contention free versus contention based transmission of reservation requests", PIMRC' 96, Taipei, Taiwan, October 1996

**Patentansprüche**

1.  Verfahren zur Vergabe von Übertragungsressourcen in einem zentralgesteuerten Kommunikationssystem an Terminals, wobei die Übertragungsressourcenvergabe durch eine Zentrale (ZE) an die Terminals (T1, T2 ...) des Kommunikationssystems erfolgt, mit folgenden Schritten:

    - die Vergabe von Übertragungsressourcen wird für rahmenorientierte Verbindungen deterministischer Art, d.h. insbesondere mit weitgehend konstanter Datenrate, von der Zentrale (ZE) unabhängig von vorhergehenden Ressourcenanforderungen durch ein Terminal (T1, T2 ...) durchgeführt,

- für solche Verbindungen wird zur Unterscheidung gegenüber anderen Verbindungen eine besondere Kennzeichnung vorgenommen,

- Nichtsynchronitäten zwischen Zentrale (ZE) und den Terminals (T1, T2 ....) werden insbesondere bei solchen Verbindungen korrigiert.

2. Verfahren nach Anspruch 1, dadurch gekennzeichnet, daß eine Ressourcenvergabe für rahmenorientierte Verbindungen mit konstanter Datenrate anhand einer in einer Verbindungsaufbauphase übertragenen Verbindungscharakteristik vorgenommen wird.

3. Verfahren nach Anspruch 1 oder 2, dadurch gekennzeichnet, daß in einer Verbindungsaufbauphase die Datenrate angegeben wird mit welcher eine Verbindung konstanter Datenrate erfolgt, wobei diese Datenrate insbesondere als Anzahl von Datenpaketen konstanter Länge, die in einer vorgegebenen Anzahl von Rahmen gesendet werden, oder als Datenkapazität für eine vorgegebenen Zeitspanne angegeben wird.

4. Verfahren nach einem der Ansprüche 1 bis 3, dadurch gekennzeichnet, daß bei übermittelten Datenpaketen, die zu langsam ankommen, Füllpakete ohne Nutzinformation in die Übertragungsrahmen eingefügt werden.

5. Verfahren nach einem der Ansprüche 1 bis 3, dadurch gekennzeichnet, daß bei übermittelten Datenpaketen, die zu schnell ankommen, zusätzliche Übertragungsressourcen angefordert werden, insbesondere unabhängig von sonstigen Übertragungsressourcenanforderungen.

6. Verfahren nach einem der Ansprüche 1 bis 5, dadurch gekennzeichnet, daß die Vergabe der Übertragungsressourcen für rahmenorientierte Verbindungen mit konstanter Datenrate im Uplink-Verkehr vorgenommen wird, d.h. von den Terminals (T1, T2, ...) zur Zentrale (ZE), bzw. von Terminal zu Terminal im Direct Mode Verkehr.

7. Verfahren nach einem der Ansprüche 1 bis 6, dadurch gekennzeichnet, daß für andere Verbindungen, d.h. Verbindungen nicht konstant der Datenrate, die einem Terminal (T1, T2 ...) von der Zentrale (ZE) zugewiesenen Übertragungsressourcen aufgrund des Füllstandes seines Sendepuffers bestimmt werden.

8. Verfahren nach einem der Ansprüche 2 bis 7, dadurch gekennzeichnet, daß zur Beschreibung der Verbindungscharakteristik die Parameter Datenrate, zwischen Ankuftszeit von Datenpaketen und maximale Schwankung der Zwischenankunftszeit der Datenpakete übertragen und ausgewertet werden.

9. Verfahren nach einem der Ansprüche 1 bis 8, dadurch gekennzeichnet, daß zusätzliche Informationen, die über konstantratige Verbindungen in der Zentrale (ZE) bekannt sind, z.B. der Ankunftszeitpunkt des jeweils nächsten Datenpaketes, genutzt werden zur Optimierung der Ressourcenanforderungen.

Fig. 1

Fig. 2

| MAC-Rahmen | MAC-Rahmen | MAC-Rahmen | MAC-Rahmen |
|---|---|---|---|

| BC-Phase | DL-Phase | UL-Phase | RA-Phase |
|---|---|---|---|

verschiebbar

Fig. 3

| MAC-Rahmen | MAC-Rahmen | MAC-Rahmen | MAC-Rahmen |
|---|---|---|---|

| BC-Phase | DL-Phase | Direct Mode-Phase | UL-Phase | RA-Phase |
|---|---|---|---|---|

verschiebbar          verschiebbar

| MAC-Rahmen | MAC-Rahmen | MAC-Rahmen | MAC-Rahmen |
|---|---|---|---|

*Fig. 4*

| $BC_1$ | $BC_2$ | | $BC_n$ | $FC_1$ | $FC_2$ | | $FC_n$ | $DL_1$ | $DL_2$ | | $DL_n$ | | $UL_1$ | $UL_2$ | | $UL_n$ | $RA_1$ | $RA_2$ | | $RA_n$ |
|---|---|---|---|---|---|---|---|---|---|---|---|---|---|---|---|---|---|---|---|---|

*Fig. 5*

T 2

T 1

ZE

T 3

*P1*   *P2*   *P3*

| Rahmen 1 | Rahmen 2 | Rahmen 3 |
|---|---|---|

↑     ↑     ↑

Übertragung möglich     Übertragung nicht möglich

*Fig. 6*

| Rahmen 1: | BC-P | T1 | T1 | T2 | T3 | RA-P |
|---|---|---|---|---|---|---|
| Rahmen 2: | BC-P | Leer | T2 | T3 | | RA-P |
| Rahmen 3: | BC-P | Leer | | T2 | T3 | RA-P |
| Rahmen 4: | BC-P | T1 | T1 | T2 | T3 | RA-P |
| Rahmen 5: | BC-P | T3 | | T2 | Leer | RA-P |
| Rahmen 6: | BC-P | T3 | | T2 | Leer | RA-P |
| Rahmen 7: | BC-P | T1 | T1 | T2 | Leer | RA-P |

Fig. 7

Rahmen 1   Rahmen 2   Rahmen 3   Rahmen 4   Rahmen 5   Rahmen 6   Rahmen 7

P11   P21   P31   P41   P51   P61   P71

Fig. 8

Fig. 9

Rahmen 1   Rahmen 2   Rahmen 3   Rahmen 4   Rahmen 5   Rahmen 6

| Rahmen 1: | BC-P | T1 | T1 | T2 | T3 | | RA-P |
|---|---|---|---|---|---|---|---|
| Rahmen 2: | BC-P | T2 | | T3 | | | RA-P |
| Rahmen 3: | BC-P | | T3 | | T2 | T2 | RA-P |
| Rahmen 4: | BC-P | T1 | T1 | T3 | | T2 | RA-P |
| Rahmen 5: | BC-P | | T3 | | | T2 | RA-P |
| Rahmen 6: | BC-P | T2 | | T3 | | | RA-P |
| Rahmen 7: | BC-P | T2 | T1 | T1 | T3 | | RA-P |

Fig. 10